# EUROPEAN PATENT APPLICATION

(11) **EP 2 098 884 A1**
(43) Date of publication of application: **09.09.2009**
(21) Application number: 08004100.7
(22) Date of filing: 05.03.2008
(51) Int. Cl.: G01S 7/527

(54) **A method for identifying a main echo in a sonic measurement system**

(71) Applicant: Siemens Milltronics Process Instruments Inc., ON K9J 7B1 Peterborough (CA)
(72) Inventor: Larocque, Jean-René, Peterborough ON K9J8E1 (CA)
(74) Representative: Maier, Daniel Oliver

(57) **Abstract**

A method for identifying a main echo (A₂) in a sonic measurement system, said method comprising the steps of:
- transmitting a swelling and abruptly ending tone pulse with the amplitude increasing over a given number of N oscillation periods,
- receiving an echo from said tone pulse,
- converting said echo into an echo signal (ES),
- determining a rising upper envelope portion (ENV₁) or decreasing lower envelope portion of said echo signal (ES),
- determining the beginning (to) of said envelope portion (ENV₁) and
- identifying the N-th cycle of the echo signal (ES) since its beginning (to) as the position of the main echo (A₂).

## Description

The present invention relates to a method for identifying a main echo in a sonic measurement system. Such measurement system may be used for open channel flow measurement. A swelling and abruptly ending ultrasonic tone pulse is repeatedly transmitted with the amplitude increasing over a given number of N oscillation periods. An echo from said tone is received and converted into an echo signal for further processing. The position of the echo may then be established by the end of the swelling tone of the echo. To do so, the highest peak of the echo signal is considered as end of the echo and the position of the main echo. This approach is based on the hypothesis that overlapping secondary echoes will always be smaller. Therefore, a problem arises when a secondary echo from the target of the measurement or other obstacles occurs which is stronger than expected. When this happens, a wrong peak of the echo signal is identified as the position of the min echo, thus introducing a large measuring error.

According to the invention this problem is solved by the method set forth in claim 1, said method comprising the steps of:
- transmitting a swelling and abruptly ending tone pulse with the amplitude increasing over a given number of N oscillation periods,
- receiving an echo from said tone pulse,
- converting said echo into an echo signal,
- determining a rising upper envelope portion or decreasing lower envelope portion of said echo signal,
- determining the beginning of said envelope portion and
- identifying the N-th cycle of the echo signal since its beginning as the position of the main echo.

Preferred embodiments of the invention are defined in the remaining claims.

Thus, even if the wanted echo is overlaid by a stronger secondary echo, it will not change the determination of the beginning of the wanted echo.

The invention will be now described in more detail with reference to preferred embodiments shown by way of nonlimiting example in the attached drawings, wherein:
- Figure 1: shows a transmit tone pulse,
- Figure 2: shows an undisturbed expected echo signal,
- Figure 3: shows a disturbed problem echo,
- Figure 4: shows an example for identifying a main echo in the problem echo, and
- Figure 5: shows a further example to identify the main echo.

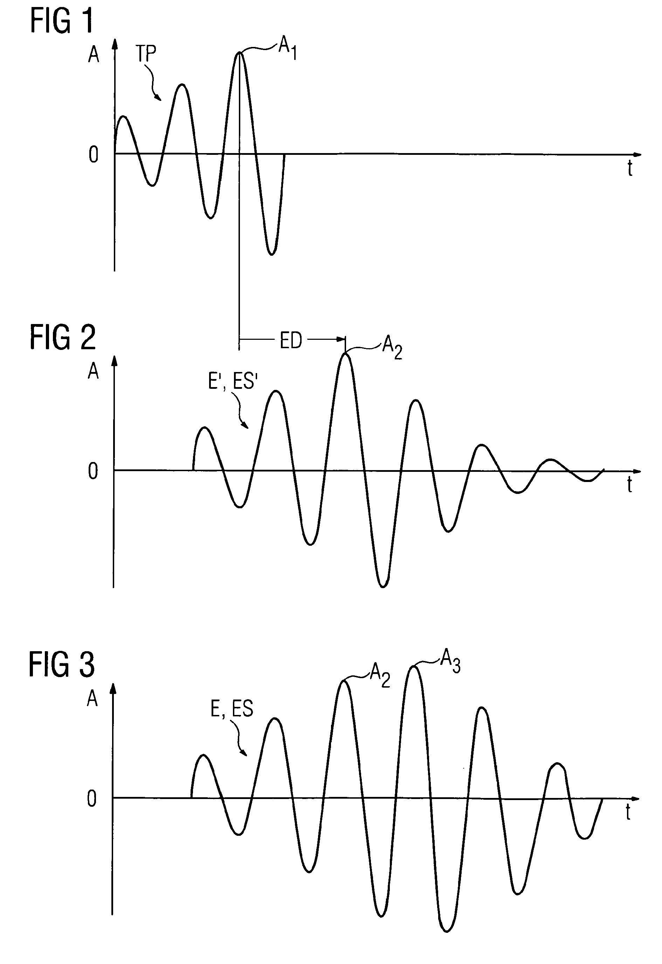

Reference is first made to Figure 1 which shows a tone pulse TP, e. g. an ultrasonic pulse, which is transmitted to a measuring target such as a flowing liquid in an open channel. The amplitude A of the transmit tone pulse TP steadily increases over a given number of N (here N = 3) cycles, after which the tone pulse TP abruptly ends. The distance to the target is determined from the echo delay.

Figure 2 shows the typical undisturbed echo E' from the target or equivalently, the electrical echo signal ES' derived from said echo E'. It should be noted that the frequencies of the tone pulse TP and the echo E can be different when the target is moving. The highest peak A₂ of the echo E' or echo signal ES' corresponds to the highest peak A₁ of the transmitted tone pulse TP so that the echo delay ED can be simply determined from the distance of the two peaks A₁ and A₂ on the time axis t.

Figure 3 shows another example of the echo E or echo signal ES which is now overlaid by an unexpected strong secondary echo. As can be clearly seen, the highest peak A₃ of the echo E or echo signal ES does not correspond to the highest peak A₁ of the transmitted tone pulse TP so that identifying the position of the echo E using its highest peak A₃ will introduce a large measuring error.

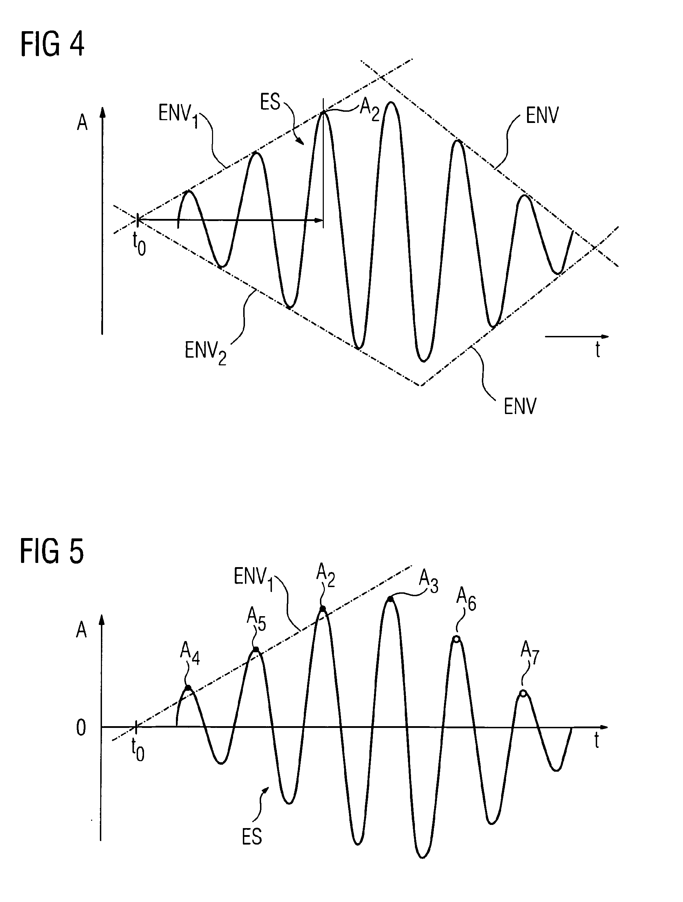

Figure 4 illustrates the method according to the invention where an envelope ENV of the echo signal ES is estimated. By detecting a change in slope in the envelope ENV a rising upper envelope portion ENV₁ and a decreasing lower envelope portion ENV₂ are identified. Starting from the intersection of the envelope portion ENV₁ and ENV₂ at point to, the peak A₂ of the echo E or echo signal ES corresponding to the highest peak A₁ of the transmitted tone pulse TP is calculated N = 3 cycles away from said point to. The N-th cycle may be identified by the N-th peak A₂ of the echo signal ES.

In the alternative example of Figure 5, the positive peaks A₂, ..., A₇ of the echo signal ES are identified. Next, those of the identified peaks A₂, ..., A₇ showing steadily increasing positive peak heights are identified and a regression curve is determined from said peaks A₂, A₃, A₄, A₅ as the upper envelope portion ENV₁. The beginning to of said envelope portion ENV₁ is determined by its intersection with a zero line. The N-th cycle of the echo signal ES since its beginning t₀ is determined as the position of the main echo A₂.

If the echo signal E is absolute-valued or squared, the N-th cycle is identified by the 2N-th peak of the echo signal ES.

## Claims

1. A method for identifying a main echo (A₂) in a sonic measurement system, said method comprising the steps of:
- transmitting a swelling and abruptly ending tone pulse (TP) with the amplitude (A) increasing over a given number of N oscillation periods,
- receiving an echo (E) from said tone pulse (TP),
- converting said echo (E) into an echo signal (ES),
- determining a rising upper envelope portion (ENV₁) or decreasing lower envelope portion (ENV₂) of said echo signal (ES),
- determining the beginning (to) of said envelope portion (ENV₁, ENV₂) and
- identifying the N-th cycle of the echo signal (ES) since its beginning (to) as the position of the main echo (A₂).

2. The method according to claim 1, wherein the step of determining the envelope portion (ENV₁) of said echo signal (ES) comprises:
identifying peaks (A₂, A₃, A₄, A₅) of the echo signal (ES) showing steadily increasing positive or steadily increasing negative peak heights and
determining a regression curve from said peaks as the envelope portion (ENV₁).

3. The method according to claim 1 or 2, wherein the beginning of said envelope portion (ENV₁) is determined by the intersection of the envelope portion (ENV₁) and a zero line.

4. The method according to claim 1 or 2, wherein both the rising upper envelope portion (ENV₁) and the decreasing lower envelope portion (ENV₂) are determined and wherein the beginning of said envelope portions (ENV₁, ENV₂) is determined by their intersection.

5. The method according to one of the preceding claims, wherein the N-th cycle is identified by the N-th peak (A₂) of the echo signal (ES).

6. The method according to one of claims 1 to 3, further comprising absolute-valuing or squaring the echo signal (ES) and identifying the N-th cycle by the 2N-th peak of the echo signal (ES).
